# EUROPEAN PATENT SPECIFICATION

(11) **EP 2 970 639 B1**
(45) Date of publication and mention of the grant of the patent: **17.02.2021**
(21) Application number: 14764661.6
(22) Date of filing: 12.03.2014
(51) Int. Cl.: C08L 1/04, C08J 3/20, C08J 5/18, C08K 5/42

(54) **FLEXIBLE NANOCRYSTALLINE CELLULOSE (NCC) FILMS WITH TUNABLE OPTICAL AND MECHANICAL PROPERTIES**
FLEXIBLE NANOKRISTALLINE CELLULOSEFILME MIT ABSTIMMBAREN OPTISCHEN UND MECHANISCHEN EIGENSCHAFTEN
FILMS SOUPLES DE CELLULOSE NANOCRISTALLINE (NCC) PRÉSENTANT DES PROPRIÉTÉS OPTIQUES ET MÉCANIQUES AJUSTABLES

(30) Priority: 12.03.2013 US 201361777203 P
(43) Date of publication of application: 20.01.2016
(73) Proprietor: Celluforce Inc., Montréal, Québec H3A 1K2 (CA)
(72) Inventor: HAMAD, Wadood Yasser, Vancouver, British Columbia V6J 2G2 (CA); ATIFI, Siham, Vancouver, British Columbia V6T 1Z4 (CA); BERRY, Richard McKinnon, Québec J7V 7P2 (CA)
(74) Representative: Regimbeau
(86) International application number: PCT/CA2014/050219
(87) International publication number: WO 2014/138976

(56) References cited:
- WO-A1-2012/068670
- US-A1- 2010 162 926
- JINHE PAN ET AL: "Parameters Affecting the Chiral Nematic Phase of Nanocrystalline Cellulose Films", MACROMOLECULES, vol. 43, no. 8, 2 April 2010 (2010-04-02), pages 3851-3858, XP55098522, US ISSN: 0024-9297, DOI: 10.1021/ma902383k
- DHAR, N ET AL. INTERACTIONS OF NANOCRYSTALLINE CELLULOSE WITH AN OPPOSITELY CHARGED SURFACTANT IN AQUEOUS MEDIUM COLLOIDS AND SURFACES A :PHYSIOCHEMICAL AND ENGINEERING ASPECTS vol. 415, 19 September 2012, pages 310 - 319, XP055222587
- ALILA, S ET AL.: 'Adsorption of a Cationic surfactant onto Cellulosic Fibers I. Surface charge Effects' LANGMUIR vol. 21, 26 July 2005, pages 8106 - 8113, XP055222588
- PENG, B.: 'Interactions between surfactants and polymer-grafted nanocrystalline cellulose.' COLLOIDS AND SURFACES A: PHYSIOCHEMICAL AND ENGINEERING ASPECTS vol. 421, 08 January 2013, pages 142 - 149, XP028990543
- LV , W ET AL.: 'Preparation of hemocompatible cellulosic paper based on P(DMAPS)-functionalized surface.' COLLOIDS AND SURFACES B: BIOINTERFACES, ABSTRACT ONLY vol. 116, 01 April 2014, pages 537 - 543, XP055222593

## Description

### FIELD OF THE DISCLOSURE

This invention describes development of a novel flexible film comprising nanocrystalline cellulose (NCC), or cellulose nanocrystals (CNC), and a controlled amount of a suitable zwitterionic (amphoteric) surfactant.

### BACKGROUND OF THE DISCLOSURE

Nanocrystalline cellulose (NCC), also referred to as cellulose nanocrystals (CNC), is extracted as a colloidal suspension by (typically sulfuric) acid hydrolysis of lignocellulosic materials, such as bacteria, cotton, or wood pulp. NCC is comprised of cellulose, a linear polymer of β(1→4) linked D-glucose units, whose chains are arranged to form crystalline and amorphous domains.

Colloidal suspensions of cellulose crystallites form a chiral nematic structure upon reaching a critical concentration. Hydrogen bonding between the cellulose chains can stabilize the local structure in NCC, and plays a key role in the formation of crystalline domains. The iridescence of NCC self-assemblies is typically characterized by the finger-print patterns, where the patch work of bright and dark regions is typical of spherulitic behavior of fibrillar crystals in which the molecules are packed with their axes perpendicular to the fibrillar axis.

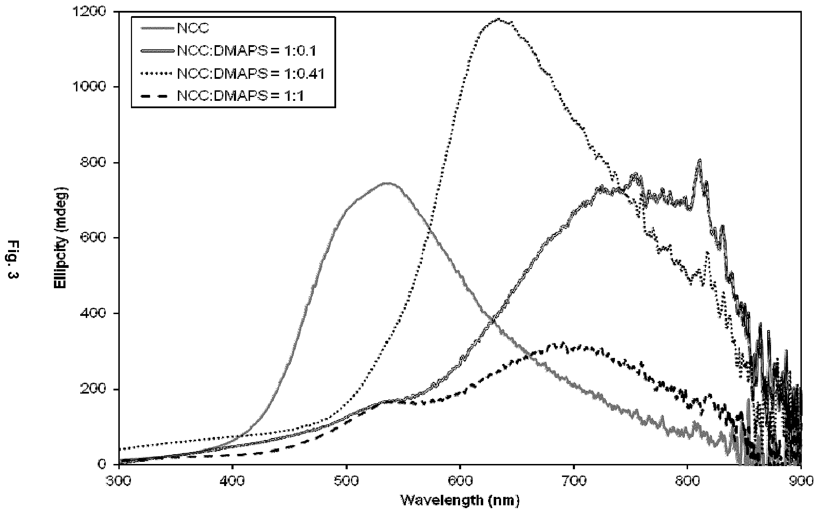

WO 2012/068670 discloses a NCC - cationic surfactant adducts, in particular cetyl trimethylammonium bromide (CTAB) adduct, and the properties of the adduct with regard to interacting with certain pharmaceutical compounds at page 10, lines 8-11 and 17-24, as well as in figures 3-5, 7 and 8.

### SUMMARY OF THE DISCLOSURE

In one aspect of the present disclosure, there is provided a NCC-surfactant adduct comprising NCC and one or more zwitterioninc surfactant; wherein said one or more zwitterionic surfactant is adsorbed onto said NCC.
In this first aspect, the invention specifically relates to such a NCC-surfactant adduct, wherein said zwitterionic surfactant is comprising a quaternary ammonium cationic part and a sulfonate anionic part and wherein the NCC:surfactant mass ratio is from 1:0.01 to 1:1.

In one aspect of the present disclosure, there is provided a process for preparing a NCC-surfactant adduct comprising providing a suspension of NCC in an aqueous medium; adding one or more zwitterionic surfactant and contacting said NCC and said zwitterionic surfactant to form the NCC-surfactant adduct, and purifying the NCC-surfactant adduct.
In this second aspect, the invention specifically relates to such a process for preparing a NCC-surfactant adduct, wherein said zwitterionic surfactant is comprising a quaternary ammonium cationic part and a sulfonate anionic part and wherein the NCC:surfactant mass ratio is from 1:0.01 to 1:1.

In one aspect of the present disclosure, there is provided a process for preparing a film comprising providing a suspension of NCC-surfactant adduct as defined herein in an aqueous medium; and substantially or completely removing said aqueous medium to produce said film.
In this last aspect, the invention specifically relates to such a process for preparing a film wherein the NCC-surfactant adduct is as defined in the first aspect of the invention.

### BRIEF DESCRIPTION OF THE FIGURES

FIG. 1 illustrates chiral nematic organization of flexible NCC films at different surfactant (DMAPS) ratios. Top left is pure NCC, top right is a film with NCC:DMAPS = 1:0.1, bottom left NCC:DMAPS = 1:0.4, and bottom right NCC:DMAPS = 1:1.
FIG. 2 is UV-Vis measurements of cast NCC films at different DMAPS ratios.
FIG. 3 is CD measurements of cast NCC films at different DMAPS ratios.
FIG. 4 illustrates the mechanical response of NCC films containing different DMAPS ratios.
FIG. 5 illustrates the mechanical response of NCC films containing similar amounts of DMAPS but prepared at different pH.
FIG. 6 illustrates zwitterion-NCC (NCC:DMAPS = 1:1) films prepared according to this disclosure but purified using HCI and EtOH. Films are transparent with no chiral nematic organization.

### DETAILED DESCRIPTION OF THE EMBODIMENTS

Nanocrystalline cellulose (NCC), or cellulose nanocrystals (CNC), is characterized by high crystallinity (between 85 and 97%, typically greater than 90%) approaching the theoretical limit of the cellulose chains (Hamad W. Y., and Hu, T. Q., Can. J. Chem. Eng. 88: 392-402, 2010). NCC can further be characterized by a degree of polymerization (DP) in the range 90 ≤ DP ≤ 110, and 3.7-6.7 sulphate groups per 100 anhydroglucose units (Hamad W. Y., and Hu, T. Q., Can. J. Chem. Eng. 88: 392-402, 2010). The crystallites have aspect ratios between 10 and 20 (Hamad W. Y., and Hu, T. Q., Can. J. Chem. Eng. 88: 392-402, 2010). Their physical dimensions depend on the raw material used in the extraction, which ranges between 5-15 nm in cross-section and 100-150 nm in length for bleached kraft pulp. These charged crystallites can be suspended in water, or other solvents if appropriately compatibilized, or self-assemble to form solid materials by air, spray- or freeze-drying. Hydrogen bonding between cellulose chains can stabilize the local structure in NCC, and plays a key role in the formation of crystalline domains. Crystallinity strongly influences the physical and chemical behaviour of NCC. For example, the crystallinity of NCC directly influences the accessibility for chemical derivatization, swelling and water-binding properties.

When NCC particles self-assemble upon evaporation of water, they form brittle films. These films retain the chiral nematic structure of the liquid crystalline phase. Owing to their brittle nature, the films are rendered unsuitable for applications whereby NCC may be applied as a structurally integral film or coating. The current invention discloses a novel way to overcome the brittle feature of typical NCC films.

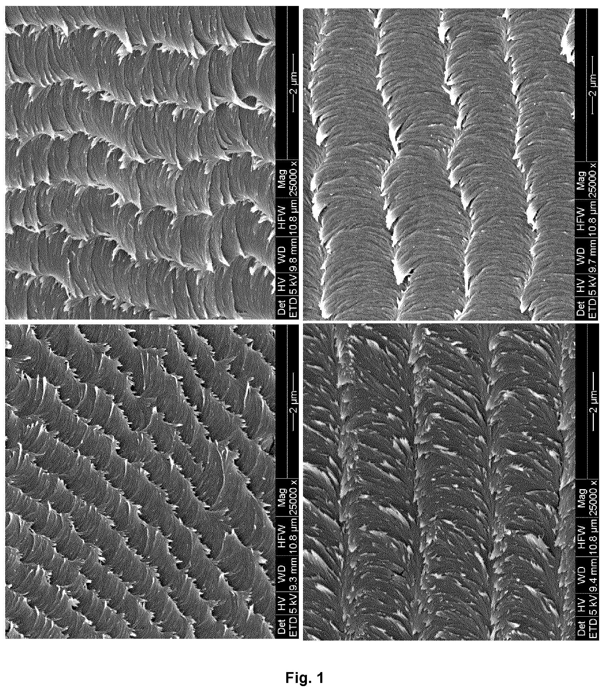

The novel NCC films prepared according to the present invention retain their unique chiral nematic structure (FIG. 1), but, in addition, have superbly improved strength, stiffness and toughness. The films are iridescent and have a high level of structural integrity, where mechanical properties can be engineered to suit the end applications. Flexible NCC films can be used in a multitude of applications, for instance, electrostatic shielding, gas barrier, hard coatings, printing.

In an aspect of the present disclosure, aqueous suspensions of NCC are heated and mixed with a desired amount of a suitable amphoteric surfactant, for example, a zwitterionic surfactant. Amphoteric, or zwitterionic, surfactants have both cationic and anionic centres attached to the same molecule. The cationic part is typically based on primary, secondary, or tertiary amines or quaternary ammonium cations. The anionic part can be more variable and include sulfonates.

Examples of zwitterioinic surfactants that can be used, according to the present invention, to adsorb to the anionic sulfated NCC include, but are not limited to: 3-(N,N-dimethylmyristylammonio)-propanesulfonate, 3-(N,N-dimethylpalmitylammonio)-propanesulfonate, 3-(N,N-dimethyloctadecylammonio)-propanesulfonate, N-dodecyl-N,N-dimethyl-3-ammonio-1-propanesulfonate, 3-(decyldimethylammonio)propanesulfonate, 3-(N,N-dimethyloctylammonio)propanesulfonate, and 3-[N,N-dimethyl(3-palmitoylaminpropyl)ammonio]-propanesulfonate. In one embodiment of the present invention, the surfactant is 3-(N,N-Dimethylmyristylammonio)propanesulfonate (DMAPS).

In the context of the present invention, suitable zwitterionic surfactant can have a Critical Micelle Concentration (CMC), i.e., maximum monomer concentration, between 0.01 and 40 mM; and an aggregation number, or average number of monomers in a micelle, in the range10 to 200. Ideally, CMC should be in the range 0.1 to 0.4 mM and the aggregation number around 80. Experiments to determine the aggregation number are known in the art, for example by using a luminescent probe, quencher and a known concentration of surfactant.

According to the present invention, the zwitterionic surfactant-to-NCC mass ratio used in the process and NCC-surfactant described herein ranges from 0.1:1 to 1:1, and lower ratios in the range of 0.01:1 are also possible.

### Examples

### Reaction:

40 g of aqueous NCC suspension was mixed with 110 g of deionized (DI) water and sonicated for 10 min at 60% max power in a Fisher Sonic Dismembrator. The NCC solids contents in the suspension were 2 %. The NCC suspension was heated to 80 °C, and a zwitterioninc surfactant, 3-(N,N-Dimethylmyristylammonio)propanesulfonate (DMAPS) suspension was added with vigorous stirring to produce suspensions with the following NCC:DMAPS mass ratios: 1:0.1, 1:0.41 and 1:1. The mixture was continuously stirred for 2 hours at 80 °C.

### Purification:

After completion of the reaction, the clear suspension was mixed with a disintegrator for 1 min and dialyzed against DI water until reaching a stable conductivity value. The dialyzed suspension was further sonicated for 10 min at 60% max. power.

### Alternative purification:

In another preparation, the purification procedure was modified as follows. After completion of the reaction between NCC and the surfactant, the suspension was precipitated by adding HCI (37%) until reaching pH = 1. A very viscous (gel-like) suspension was formed, and the suspension was centrifuged once at 4000 rpm for 30 min. The precipitated paste was subsequently washed with EtOH and further centrifuged at 4000 rpm for 30 min. This was repeated twice.

The purified paste was re-dispersed in DI water and air dried.

### Physico-Chemical Characteristics

The size of baseline NCC and DMAPS-NCC particles was determined by photon correlation spectroscopy (Zetasizer 3000, Malvern Instruments, UK), which uses dynamic laser light scattering. NCC particles size was found to be 50.5 ± 0.4 nm, and that of NCC-DMAPS 51.8 ± 1.3 nm in the case of NCC:DMAPS = 1:0.41, and 53.2 ± 1.7 nm for NCC: DMAPS = 1:1.

Once the reaction is complete and purified, as described above, NCC-DMAPS films are prepared by evaporation or casting. Any suitable film preparation method is contemplated.

Examining Table 1 it is possible to correlate the amount of zwitterionic surfactant (DMAPS) determined gravimetrically with the nitrogen and sulfur contents from elemental analysis. For samples B and D, where the ratio of NCC-to-DMAPS was 1-to-0.41 the nitrogen content was practically identical within the margin of error associated with elemental measurements, namely, 0.58 and 0.61 %, respectively. When the NCC-to-DMAPS ratio is increased to 1-to-1 (sample C, Table 1), the nitrogen content was found to be 1.51 %. The typical nitrogen content in pure NCC (Control, Table 1) was less than 0.3 %. Table 1 further indicates successful ionic adsorption of the zwitterionic surfactant to NCC surface by examining the sulfur content. For samples B, C, and D, the sulfur content was 1.69, 3.63, and 1.44 %, respectively. The sulfur content is typically 0.68 % for NCC extracted using sulfuric acid hydrolysis (Control, Table 1). It is apposite to note that sample A, with NCC:DMAPS = 1:0.1, has a gravimetric weight determination of DMAPS less than 5 % and a corresponding less than 0.3 % nitrogen content, as well as 0.64 % sulfur. Samples A, B and C (Table 1) were prepared with sodium (Na)-form NCC, whereas sample D (which has similar ratio of NCC:DMAPS to sample B) was prepared with protonated (H)-form NCC. This indicates that any form of sulfated nanocrystalline cellulose, or cellulose nanocrystals, can be reacted with the zwitterionic surfactant to generate flexible, iridescent NCC films.

**Table 1: Elemental and conductivity data for NCC films prepared at different zwitterionic surfactant ratios.**

| | NCC:DMAPS Mass Ratio | pH | Conductivity (µS.cm⁻¹) | DMAPS (wt.%) | C (%) | H (%) | N (%) | S (%) |
|---|---|---|---|---|---|---|---|---|
| A | 1:0.1 | 4.03 | 103 | <5 | 37.9 | 5.65 | <0.3 | 0.64 |
| B | 1:0.41 | 4.17 | 79 | 22 | 43.5 | 6.70 | 0.58 | 1.69 |
| C | 1:1 | 4.23 | 75 | 53 | 46.7 | 7.74 | 1.51 | 3.63 |
| D | 1:0.41 | 3.04 | 319 | 19 | 43.1 | 6.66 | 0.61 | 1.44 |
| Control | 1:0 | 6.9 | 377 | 0 | 40.2 | 5.99 | <0.3 | 0.68 |

NCC obtained from sulfuric acid hydrolysis of lignocellulosic materials contains (negative) sulfate groups on the surface. A suitable zwitterionic surfactant, as in 3-(N,N-dimethylmyristylammonio)-propanesulfonate, DMAPS, contains both negative (SO₃⁻) and positive (N⁺) charges. It is believed that the N⁺ from the surfactant (such as DMAPS) is adsorbed to the SO₃⁻ (i.e. sulfonates replacing the C-6 hydroxy of D-glucose) on the NCC surface, resulting in a net negative charge onto the NCC-DMAPS complex as shown in the scheme below:

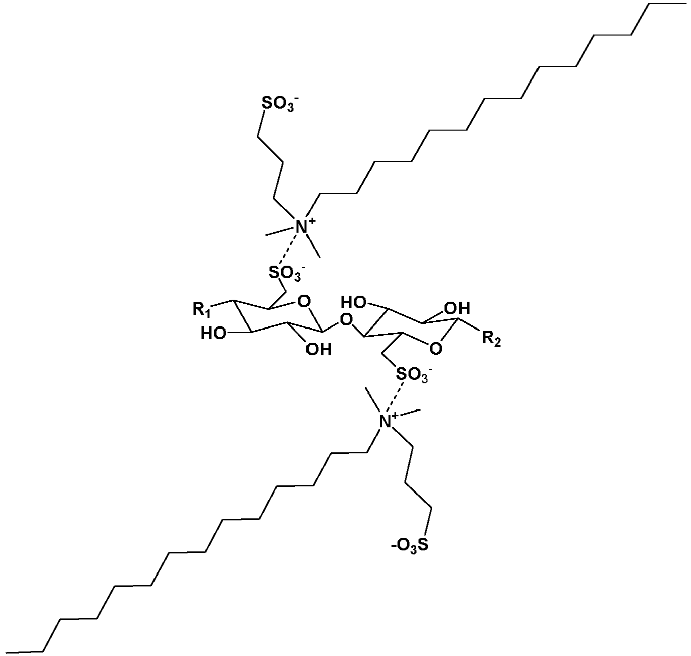

Wherein the dotted lines represent an ionic interaction, R1 and R2 are β(1→4) linked D-glucose units present in cellulose. Although each sulfonate in the scheme above is linked to a surfactant molecule, it is not intended to mean that all glucose will have such ionic linking. The number of such surfactant molecule will depend on the concentration and nature of surfactant used.

Like pure NCC, NCC treated with zwitterionic surfactants could be deposited onto an anode when a suitable electrical current was passed through an aqueous suspension of NCC or NCC-DMAPS complexes.

NCC treated with zwitterionic surfactants essentially remains hydrophilic. It is therefore dispersible in polar protic solvents, like water, and some polar aprotic solvents, like N,N-dimethylformamide (DMF), but not in non-polar solvents, like toluene or chloroform .

### Optical and Mechanical Properties

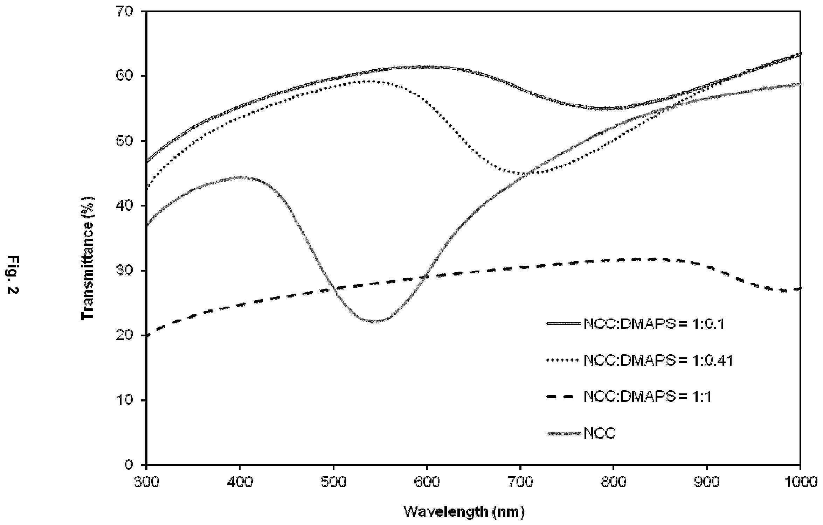

The micelles of the zwitterionic surfactant act as small springs adsorbed onto the NCC surface. However, the NCC crystals are unperturbed, and as such retain their chiral nematic characteristic. Cast NCC films, at different ratios of NCC-to-DMAPS are characteristically chiral nematic in nature, as is pure NCC. The chiral pitch for NCC films having different zwitterion ratios ranges from 4.3 to 5.6 µm, which is typical for pure NCC films. Measurements carried out on the various NCC films described hereinbefore, using UV-Vis and circular dichroism (CD) techniques, revealed a shift towards higher wavelengths as the zwitterionic surfactant ratios were increased relative to pure NCC (Figs. 2 and 3). This indicates the ability to tune the optical response of NCC films by controlling the amount of zwitterionic surfactant adsorbed onto the NCC surface.

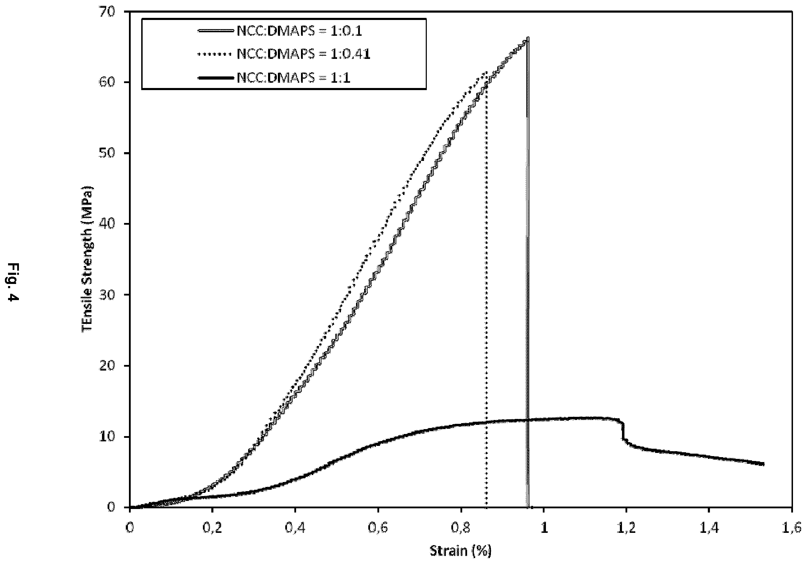

While the chiral nematic characteristics of NCC films treated with zwitterionic surfactant are maintained and can be tailored by controlling the amount of surfactant used, the mechanical properties of the resulting films are greatly affected. The zwitterionic surfactants, as described above, act as small springs adsorbed onto the NCC surface via ionic linkages. The tensile strength, stiffness, toughness and stretch of the resulting NCC films are controlled via the use of zwitterionic surfactant (Fig. 4).

For NCC-to-DMAPS ratio equals 1:0.1 (sample A in Table 1), the NCC film is very strong resulting in an ultimate tensile strength of 63 MPa and maximum strain just below 1 % (Fig. 4). As the zwitterionic surfactant-to-NCC ratio is increased to parity (sample C in Table 1), the response of the NCC film becomes characteristically elastic-plastic, and the film is highly flexible (Fig. 4). The ultimate tensile strength and maximum strain average values are 13 MPa and 1.2 %, respectively. These are significantly stronger and more flexible films than could be obtained with, for instance, graphene/polyaniline composite paper or graphene paper (Wang, D. W, Li, F., Zhao, J., Ren, W., Chen, Z. G., Tan, J., Wu, Z. S., Gentle, I., Lu, G. Q., Cheng, H. M., "Fabrication of graphene/polyaniline composite paper via in situ anodic electropolymerization for high-performance flexible electrode," ACS Nano 3: 1745-1752 (2009). For graphene/polyaniline composite paper and graphene paper, it has been reported that the tensile strength was 12.6 and 8.8 MPa, and maximum strain, 0.11 and 0.08 %, respectively.

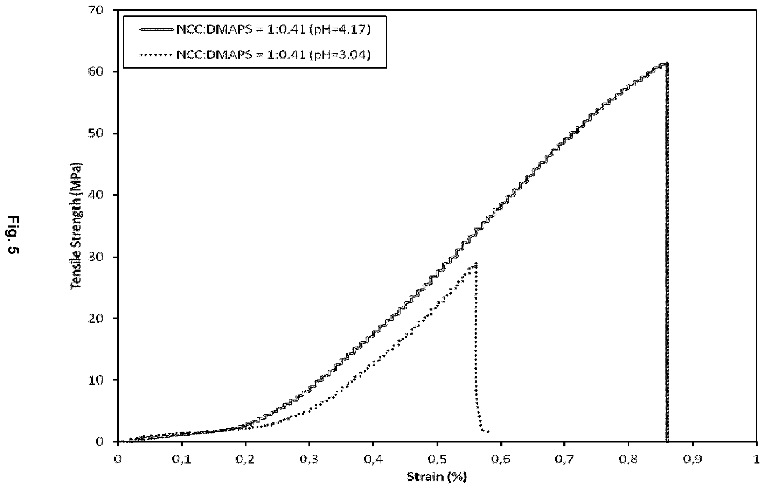

It is apposite to note that the pH of the NCC:DMAPS suspension affects the resulting mechanical response of cast NCC films. Samples B and D (Table 1) have similar NCC:DMAPS ratios, but different pH: 4.17 and 3.04, respectively. The tensile strength and strain of the more acidic film (sample D) were significantly lowered relative to the less acidic film (sample B) (Fig. 5).

Moreover, the incorporation of zwitterionic surfactant in the preparation of NCC films can modulate the hardness of resulting films. NCC is a typically hard material, whose hardness averages around 0.25 GPa (hardness is measured with a 25 gf load for 15 sec, and the values are converted from Vickers hardness to GPa). Gold has a typical hardness of 0.22 GPa, polystyrene 0.18 GPa, and nickel 0.64 GPa. Sample A (Table 1) measured a hardness of 0.36 GPa, and sample B 0.19 GPa, whereas sample C (NCC:DMAPS = 1:1) was too soft to record a measurement. It is evident that, in addition to the tensile strength and toughness properties, the hardness of NCC films can be calibrated and tailored using suitable amounts of zwitterionic surfactants to meet the needs of specific applications.

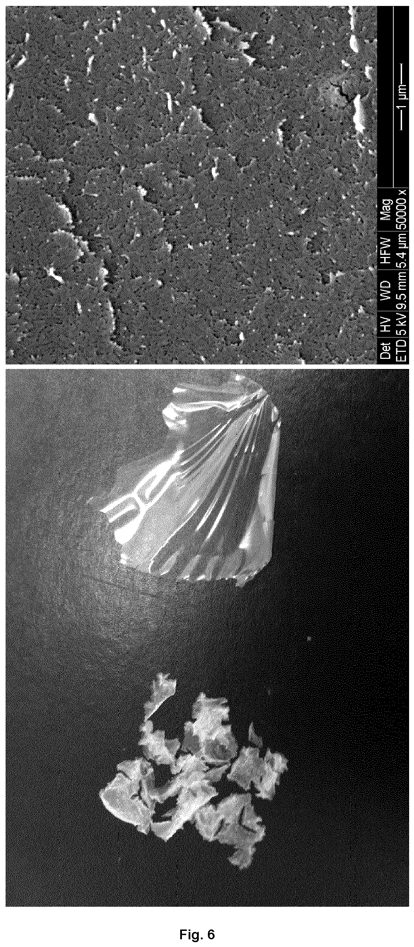

The prepared zwitterion-treated NCC films according to this disclosure (NCC:DMAPS = 1:1) but purified against HCI and EtOH (rather than dialysis; refer to Purification section above) were clear transparent films, with no chiral (iridescent) characteristics-i.e., the chiral nematic structure is disrupted by using hydrochloric acid and subsequent washing with ethanol (Fig. 6).

NCC treated with zwitterionic surfactants essentially remains hydrophilic. It is therefore dispersible in polar protic solvents, like water, and some polar aprotic solvents, like N,N-dimethylformamide (DMF), but not in non-polar solvents, like toluene or chloroform.

While the disclosure has been described in connection with specific embodiments thereof, it is understood that it is capable of further modifications and that this application is intended to cover any variation, use, or adaptation of the disclosure following, in general, the principles of the disclosure and including such departures from the present disclosure that come within known, or customary practice within the art to which the disclosure pertains and as may be applied to the essential features hereinbefore set forth, and as follows in the scope of the appended claims.

## Claims

1. A NCC-surfactant adduct comprising NCC and one or more zwitterionic surfactant; wherein said one or more zwitterionic surfactant is adsorbed onto said NCC; and said zwitterionic surfactant is comprising a quaternary ammonium cationic part and a sulfonate anionic part and wherein the NCC:surfactant mass ratio is from 1:0.01 to 1:1.

2. The NCC-surfactant adduct of claim 1, wherein said surfactant has a CMC from 0.01 and 40 mM and an aggregation number from 10 to 200.

3. The NCC-surfactant adduct of claim 1, wherein said zwitterionic surfactant is selected from 3-(N,N-dimethylmyristylammonio)-propanesulfonate, 3-(N,N-dimethylpalmitylammonio)-propanesulfonate, 3-(N,N-dimethyloctadecylammonio)-propanesulfonate, N-dodecyl-N,N-dimethyl-3-ammonio-1-propanesulfonate, 3-(decyldimethylammonio)propanesulfonate, 3-(N,N-dimethyloctylammonio)propanesulfonate, and 3-[N,N-dimethyl(3-palmitoylaminpropyl)ammonio]-propanesulfonate.

4. The NCC-surfactant adduct of claim 3, wherein said zwitterionic surfactant is 3-(N,N-dimethylmyristylammonio)-propanesulfonate (DMAPS).

5. The NCC-surfactant adduct of any one of claims 1 to 4, wherein said NCC is the sodium (Na)-form NCC.

6. The NCC-surfactant adduct of any one of claims 1 to 4, wherein said NCC is the protonated (H)-form NCC.

7. The NCC-surfactant adduct of any one of claims 1 to 5, wherein said NCC-surfactant adduct has chiral nematic characteristics.

8. The NCC-surfactant adduct of claim 6, wherein said NCC-surfactant adduct has no chiral nematic characteristics.

9. A process for preparing a NCC-surfactant adduct comprising providing a suspension of NCC in an aqueous medium; adding one or more zwitterionic surfactant and contacting said NCC and said zwitterionic surfactant to form the NCC-surfactant adduct, and purifying the NCC-surfactant adduct; and wherein said zwitterionic surfactant is comprising a quaternary ammonium cationic part and a sulfonate anionic part and wherein the NCC:surfactant mass ratio is from 1:0.01 to 1:1.

10. The process of claim 9 wherein said suspension of NCC-surfactant adduct is prepared by mixing an aqueous NCC suspension in deionized water, optionally heating said NCC suspension, and mixing said NCC suspension and a zwitterionic surfactant to produce said suspension of NCC-surfactant adduct.

11. The process of any one of claims 9 to 10 wherein said surfactant is selected from 3-(N,N-dimethylmyristylammonio)-propanesulfonate, 3-(N,N-dimethylpalmitylammonio)-propanesulfonate, 3-(N,N-dimethyloctadecylammonio)-propanesulfonate, N-dodecyl-N,N-dimethyl-3-ammonio-1-propanesulfonate, 3-(decyldimethylammonio)propanesulfonate, 3-(N,N-dimethyloctylammonio)propanesulfonate, and 3-[N,N-dimethyl(3-palmitoylaminpropyl)ammonio]-propanesulfonate.

12. The process of any one of claims 9 to 11, wherein said step of purifying is comprising dialyzing NCC-surfactant adduct in deionized water until reaching a stable conductivity value.

13. The process of any one of claims 9 to 11, wherein said step of purifying is comprising precipitating said NCC-surfactant adduct by adding an acid.

14. A process for preparing a film comprising providing a suspension of NCC-surfactant adduct as defined in any one of claims 1 to 8, in an aqueous medium; and substantially or completely removing said aqueous medium, optionally with casting of said suspension of NCC-surfactant adduct, to produce said film.

## Patentansprüche

1. NCC-Tensid-Addukt, umfassend NCC und ein oder mehrere zwitterionische Tenside; wobei das eine oder die mehreren zwitterionischen Tenside auf der NCC adsorbiert wird; und das zwitterionische Tensid einen kationischen quartären Ammoniumteil und einen anionischen Sulfonatteil umfasst und wobei das NCC:Tensid-Massenverhältnis von 1:0,01 bis 1:1 beträgt.

2. NCC-Tensid-Addukt nach Anspruch 1, wobei das Tensid eine CMC von 0,01 und 40 mM und eine Aggregationszahl von 10 bis 200 aufweist.

3. NCC-Tensid-Addukt nach Anspruch 1, wobei das zwitterionische Tensid aus 3-(N,N-Dimethylmyristylammonio)propansulfonat, 3-(N,N-Dimethylpalmitylammonio)propansulfonat, 3-(N,N-Dimethyloctadecylammonio)propansulfonat, N-Dodecyl-N,N-dimethyl-3-ammonio-1-propansulfonat, 3-(Decyldimethylammonio)propansulfonat, 3-(N,N-Dimethyloctylammonio)propansulfonat und 3-[N,N-Dimethyl-(3-palmitoylaminpropyl)ammonio]propansulfonat ausgewählt ist.

4. NCC-Tensid-Addukt nach Anspruch 3, wobei das zwitterionische Tensid 3-(N,N-Dimethylmyristylammonio)propansulfonat (DMAPS) ist.

5. NCC-Tensid-Addukt nach einem der Ansprüche 1 bis 4, wobei die NCC die Natrium-(Na)-Form-NCC ist.

6. NCC-Tensid-Addukt nach einem der Ansprüche 1 bis 4, wobei die NCC die protonierte (H)-Form-NCC ist.

7. NCC-Tensid-Addukt nach einem der Ansprüche 1 bis 5, wobei das NCC-Tensid-Addukt chirale nematische Charakteristika aufweist.

8. NCC-Tensid-Addukt nach Anspruch 6, wobei das NCC-Tensid-Addukt keine chiralen nematischen Charakteristika aufweist.

9. Verfahren zur Herstellung eines NCC-Tensid-Addukts, umfassend ein Bereitstellen einer Suspension von NCC in einem wässrigen Medium; ein Zugeben von einem oder mehreren zwitterionischen Tensiden und ein Inkontaktbringen der NCC und des zwitterionischen Tensids, um das NCC-Tensid-Addukt zu bilden, und ein Aufreinigen des NCC-Tensid-Addukts; und wobei das zwitterionische Tensid einen kationischen quartären Ammoniumteil und einen anionischen Sulfonatteil umfasst und wobei das NCC:Tensid-Massenverhältnis von 1:0,01 bis 1:1 beträgt.

10. Verfahren nach Anspruch 9, wobei die Suspension von NCC-Tensid-Addukt durch Mischen einer wässrigen NCC-Suspension in voll entsalztem Wasser, optionales Erhitzen der NCC-Suspension und Mischen der NCC-Suspension und eines zwitterionischen Tensids, um die Suspension von NCC-Tensid-Addukt zu produzieren, hergestellt wird.

11. Verfahren nach einem der Ansprüche 9 bis 10, wobei das Tensid aus 3-(N,N-Dimethylmyristylammonio)propansulfonat, 3-(N,N-Dimethylpalmitylammonio)propansulfonat, 3-(N,N-Dimethyloctadecylammonio)propansulfonat, N-Dodecyl-N,N-dimethyl-3-ammonio-1-propansulfonat, 3-(Decyldimethylammonio)propansulfonat, 3-(N,N-Dimethyloctylammonio)propansulfonat und 3-[N,N-Dimethyl-(3-palmitoylaminpropyl)ammonio]propansulfonat ausgewählt ist.

12. Verfahren nach einem der Ansprüche 9 bis 11, wobei der Schritt des Aufreinigens ein Dialysieren von NCC-Tensid-Addukt in voll entsalztem Wasser, bis ein stabiler Leitfähigkeitswert erreicht wird, umfasst.

13. Verfahren nach einem der Ansprüche 9 bis 11, wobei der Schritt des Aufreinigens ein Präzipitieren des NCC-Tensid-Addukts durch Zugeben einer Säure umfasst.

14. Verfahren zur Herstellung einer Folie, umfassend ein Bereitstellen einer Suspension von NCC-Tensid-Addukt, wie in einem der Ansprüche 1 bis 8 definiert, in einem wässrigen Medium; und ein wesentliches oder vollständiges Abziehen des wässrigen Mediums, optional mit Gießen der Suspension von NCC-Tensid-Addukt, um die Folie zu produzieren.

## Revendications

1. Adduit de NCC-tensioactif comprenant de la NCC et un ou plusieurs tensioactifs zwittérioniques ; dans lequel lesdits un ou plusieurs tensioactifs zwittérioniques sont adsorbés sur ladite NCC ; et ledit tensioactif zwittérionique comprend une partie cationique ammonium quaternaire et une partie anionique sulfonate, et dans lequel le rapport en masse NCC/ tensioactif est de 1/0,01 à 1/1.

2. Adduit de NCC-tensioactif selon la revendication 1, dans lequel ledit tensioactif a une CMC de 0,01 à 40 mM et un nombre d'agrégation de 10 à 200.

3. Adduit de NCC-tensioactif selon la revendication 1, dans lequel ledit tensioactif zwittérionique est choisi parmi le 3-(N,N-diméthylmyristylammonio)-propanesulfonate, le 3-(N,N-diméthylpalmitylammonio)-propanesulfonate, le 3-(N,N-diméthyloctadécylammonio)-propanesulfonate, le N-dodécyl-N,N-diméthyl-3-ammonio-1-propanesulfonate, le 3-(décyldiméthylammonio)-propanesulfonate, le 3-(N,N-diméthyloctylammonio)-propanesulfonate, et le 3-[N,N-diméthyl-(3-palmitoylaminopropyl)ammonio]-propanesulfonate.

4. Adduit de NCC-tensioactif selon la revendication 3, dans lequel ledit tensioactif zwittérionique est le 3-(N,N-diméthylmyristylammonio)-propanesulfonate (DMAPS).

5. Adduit de NCC-tensioactif selon l'une quelconque des revendications 1 à 4, dans lequel ladite NCC est une NCC de forme sodique (Na).

6. Adduit de NCC-tensioactif selon l'une quelconque des revendications 1 à 4, dans lequel ladite NCC est une NCC de forme protonée (H).

7. Adduit de NCC-tensioactif selon l'une quelconque des revendications 1 à 5, lequel adduit de NCC-tensioactif a des caractéristiques nématiques chirales.

8. Adduit de NCC-tensioactif selon la revendication 6, lequel adduit de NCC-tensioactif n'a pas de caractéristiques nématiques chirales.

9. Procédé pour préparer un adduit de NCC-tensioactif comprenant la fourniture d'une suspension de NCC dans un milieu aqueux ; l'addition d'un ou plusieurs tensioactifs zwittérioniques et la mise en contact de ladite NCC et dudit tensioactif zwittérionique pour former l'adduit de NCC-tensioactif, et la purification de l'adduit de NCC-tensioactif ; et dans lequel ledit tensioactif zwittérionique comprend une partie cationique ammonium quaternaire et une partie anionique sulfonate et dans lequel le rapport en masse NCC/tensioactif est de 1/0,01 à 1/1.

10. Procédé selon la revendication 9, dans lequel ladite suspension d'adduit de NCC-tensioactif est préparée par mélange d'une suspension aqueuse de NCC dans de l'eau désionisée, éventuellement chauffage de ladite suspension de NCC, et mélange de ladite suspension de NCC avec un tensioactif zwittérionique pour produire ladite suspension d'adduit de NCC-tensioactif.

11. Procédé selon l'une quelconque des revendications 9 et 10, dans lequel ledit tensioactif est choisi parmi le 3-(N,N-diméthylmyristylammonio)-propanesulfonate, le 3-(N,N-diméthylpalmitylammonio)-propanesulfonate, le 3-(N,N-diméthyloctadécylammonio)-propanesulfonate, le N-dodécyl-N,N-diméthyl-3-ammonio-1-propanesulfonate, le 3-(décyldiméthylammonio)-propanesulfonate , le 3-(N,N-diméthyloctylammonio)-propanesulfonate, et le 3-[N,N-diméthyl-(3-palmitoylaminopropyl)ammonio]-propanesulfonate.

12. Procédé selon l'une quelconque des revendications 9 à 11, dans lequel ladite étape de purification comprend une dialyse de l'adduit de NCC-tensioactif dans de l'eau désionisée jusqu'à ce qu'une valeur de conductivité stable soit atteinte.

13. Procédé selon l'une quelconque des revendications 9 à 11, dans lequel ladite étape de purification comprend une précipitation dudit adduit de NCC-tensioactif par addition d'un acide.

14. Procédé pour préparer un film comprenant la fourniture d'une suspension d'adduit de NCC-tensioactif tel que défini dans l'une quelconque des revendications 1 à 8, dans un milieu aqueux ; et l'élimination complète ou presque complète dudit milieu aqueux, éventuellement avec coulée de ladite suspension d'adduit de NCC-tensioactif, pour produire ledit film.
